# EUROPEAN PATENT APPLICATION

(11) **EP 1 304 239 A2**
(43) Date of publication of application: **23.04.2003**
(21) Application number: 02022712.0
(22) Date of filing: 10.10.2002
(51) Int. Cl.: B60C 11/12, B60C 11/11

(54) **Tread pattern for a heavy duty tire**

(30) Priority: 12.10.2001 IT TO20010971
(71) Applicant: Bridgestone/Firestone Technical Center Europe S. p. A., 00129 Roma (IT)
(72) Inventor: Scatamacchia, Andrea, 00189 Roma (IT)
(74) Representative: Jorio, Paolo

(57) **Abstract**

A heavy-duty tire (1) having a tread (2) in turn having a number of circumferential grooves (3) and a number of transverse grooves (4) defining, on the tread (2), a number of circumferential rows (5) of blocks (6); and wherein each block (6) has transverse siping (11) on a front portion of a rolling surface (7), so that the block (6) increases in rigidity from a leading edge (8) to a trailing edge (9) of the rolling surface (7).

## Description

The present invention relates to a heavy-duty tire.

More specifically, the present invention relates to a heavy-duty TBR (Truck and Bus Radial) tire comprising a tread having a number of circumferential grooves and a number of transverse grooves defining, on the tread, a number of circumferential rows of blocks.

Tires of the above type, which are normally used on drive wheels, are subject to irregular HaT (Heel and Toe) wear.

That is, as the tire rolls along the ground in a given traveling direction, each tread block, when in contact with the ground, is subjected to traction and compression forces. More specifically, if the ground-contacting surface of each block is divided into a front leading portion and a rear trailing portion in the traveling direction, the front leading portion is crushed on contact with the ground and is therefore subjected to substantially radial compression forces resulting is relatively little abrasion. The rear trailing portion, on the other hand, is deformed rearwards and rubs against the ground, so that it is subjected to tangential traction forces, which tend to abrade it and eventually result in irregular wear of the block, the formation of a step between the front leading and rear trailing portions and crosswise to the traveling direction, and in vibration which generates noise and is transmitted to the vehicle body.

It is an object of the present invention to provide a tire of the type described above, designed to substantially eliminate irregular HaT wear.

According to the present invention, there is provided a heavy-duty tire as claimed in Claim 1 and preferably as claimed in anyone of the remaining claims.

The invention will now be described by way of example with reference to the accompanying drawings, in which:
Figure 1 shows a schematic plan view of a tread portion of a tire constituting a preferred embodiment of the present invention;
Figure 2 shows a larger-scale view in perspective of a detail of Figure 1;
Figure 3 shows an axial longitudinal section of the Figure 2 detail.

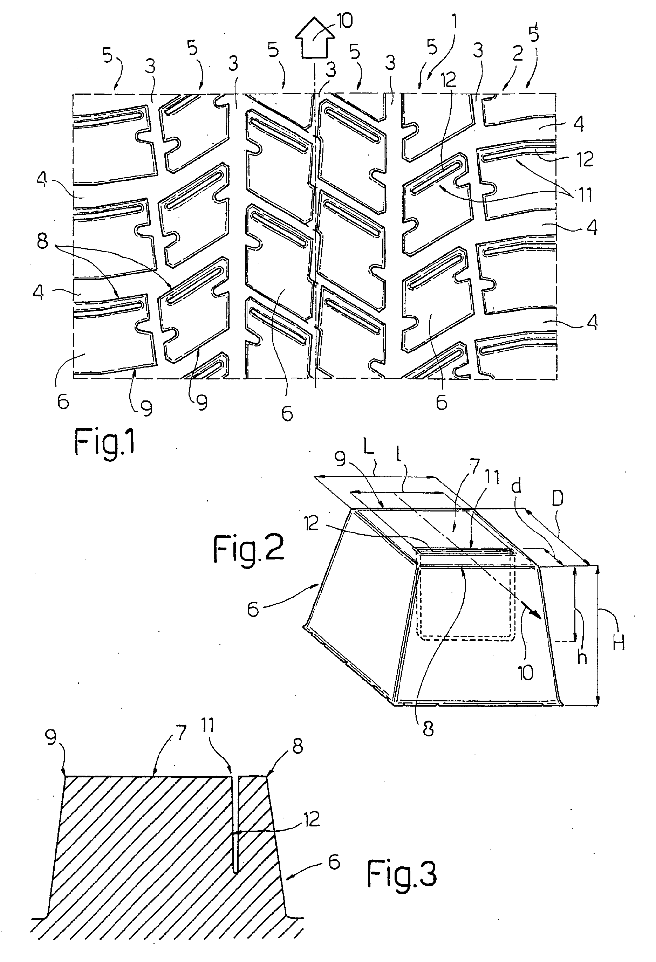

Number 1 in Figure 1 indicates as a whole a heavy-duty tire comprising a tread 2 having a number of circumferential grooves 3 and a number of transverse grooves 4 defining, on tread 2, a number of circumferential rows 5 of blocks 6.

As shown in Figure 2, each block 6 comprises a rolling surface 7 having a leading edge 8 and a trailing edge 9 located at the front and rear respectively in the traveling direction 10 of tire 1.

Each block 6 has siping 11 formed through the relative said rolling surface 7, adjacent to the relative leading edge 8, and extending in a direction substantially crosswise to traveling direction 10 and substantially parallel to the relative leading edge 8. In the example shown, siping 11 is defined by one sipe 12 formed through rolling surface 7, adjacent to leading edge 8 and shaped and oriented as leading edge 8. In embodiments not shown, however, siping 11 is defined by two or more side by side sipes similar to sipe 12.

Each sipe 12 has a maximum length l - measured crosswise to traveling direction 10 - smaller than the width L - also measured crosswise to traveling direction 10 - of rolling surface 7 of relative block 6. More specifically, each sipe 12 is closed at the opposite ends, and is located at a distance d from leading edge 8 of relative block 6 at most equal to a third, of the distance D between leading edge 8 and trailing edge 9 of block 6.

Each sipe 12 is of a width - measured in traveling direction 10 - ranging between 0.5 and 5 mm, and of a depth h at most equal to the height H of relative block 6, and preferably equal to over half of height H.

The object achieved by providing each block 6 with siping 11 is to increase the rigidity of block 6 from relative leading edge 8 to relative trailing edge 9, so that the deformation and, hence, wear produced by the tangential forces acting on the portion of rolling surface 7 close to trailing edge 9 can also be transmitted to the front portion of block 6.

The same object may, obviously, also be achieved in other ways, e.g. by substituting an insert (not shown) of softer material for the front portion of block 6. By virtue of siping 11, however, each block 6 acts, as least flexurally and in terms of deformation in contact with the ground, like a succession of two small blocks (or even more when a number of sipes 12 are provided) which are subjected, in use, to the same tangential traction forces, and which tend to even out wear over the whole rolling surface 7 of block 6.

In connection with the above, it should be pointed out that weakening the front half of each block 6 with siping 11, so that block 6 increases in rigidity from relative leading edge 8, not only eliminates irregular HaT wear, but also improves the traction of tire 1.

## Claims

1. A heavy-duty tire comprising a tread (2) having a number of circumferential grooves (3) and a number of transverse grooves (4) defining, on the tread (2), a number of circumferential rows (5) of blocks (6); each said block (6) having a rolling surface (7) having a leading edge (8) and a trailing edge (9) located, in use, at the front and rear respectively in a traveling direction (10) of the tire (1); **characterized in that** each said block (6) has siping (11) to increase in rigidity from the relative leading edge (8) to the relative trailing edge (9); said siping (11) being formed through the relative said rolling surface (7), being located at a distance (d) from said leading edge (8) at most equal to a third of a distance (D) between said leading edge (8) and said trailing edge (9), and comprising at least one sipe (12) having the same shape and orientation as said leading edge (8).

2. A tire as claimed in Claim 1, wherein said sipe (12) is of a maximum length (1), measured crosswise to said traveling direction (10), smaller than a width (L) of the rolling surface (7) of the relative said block (6).

3. A tire as claimed in Claim 1 or 2, wherein said sipe (12) is closed at opposite ends.

4. A tire as claimed in one of the preceding Claims, wherein said sipe (12) is of a width, measured in said traveling direction (10), ranging between 0.5 and 5 mm.

5. A tire as claimed in one of the preceding Claims, wherein said sipe (12) is of a depth (h) at most equal to a height (H) of the relative said block (6).

6. A tire as claimed in one of the preceding Claims, wherein said sipe (12) is of a depth (h) equal to over half a height (H) of the relative said block (6).
